# EUROPÄISCHE PATENTSCHRIFT

(11) **EP 1 163 435 B1**
(45) Veröffentlichungstag und Bekanntmachung des Hinweises auf die Patenterteilung: **21.09.2005**
(21) Anmeldenummer: 00905069.1
(22) Anmeldetag: 17.02.2000
(51) Int. Cl.: F02B 23/10

(54) **DIREKTEINSPRITZENDE OTTO-BRENNKRAFTMASCHINE**
INTERNAL COMBUSTION ENGINE WITH DIRECT FUEL INJECTION
MOTEUR A COMBUSTION INTERNE A ALLUMAGE COMMANDE ET A INJECTION DIRECTE

(30) Priorität: 12.03.1999 DE 19911023
(43) Veröffentlichungstag der Anmeldung: 19.12.2001
(73) Patentinhaber: DaimlerChrysler AG, 70567 Stuttgart (DE)
(72) Erfinder: ERNST, Johannes, D-76534 Baden-Baden (DE); HEEL, Bernhard, D-70619 Stuttgart (DE); KLENK, Rolf, D-70327 Stuttgart (DE); OTTO, Frank, D-73732 Esslingen (DE); RÖSSLER, Klaus, D-73776 Altbach (DE); VENT, Guido, D-71570 Oppenweiler (DE)
(86) Internationale Anmeldenummer: PCT/EP2000/001298
(87) Internationale Veröffentlichungsnummer: WO 2000/055480

(56) Entgegenhaltungen:
- EP-A- 0 835 994
- DE-A- 19 546 945
- DE-A- 19 749 295
- DE-C- 19 642 653
- GB-A- 2 233 390

## Beschreibung

Die Erfindung betrifft eine direkteinspritzende Otto-Brennkraftmaschine der im Oberbegriff des Patentanspruchs 1 angegebenen Gattung.

Bei direkteinspritzenden Otto-Brennkraftmaschinen ist ein Brennraum in jedem Zylinder von einem längsbeweglichen Kolben und der Innenwand eines Zylinderkopfes begrenzt, wobei ein Injektor Kraftstoff zur inneren Gemischbildung mit separat zugeführter Verbrennungsluft in den Brennraum einspritzt. Die Zusammensetzung des Kraftstoff/Luft-Gemisches muss innerhalb des zündfähigen Fensters liegen, um mittels eines Zündfunkens zündbar zu sein, welcher zwischen den Elektroden einer Zündkerze auslösbar ist.

Aus der EP 835994 A2 ist eine direkteinspritzende Brennkraftmaschine bekannt, welche einen Pultdachförmigen Brennraum und einen mittig angeordneten Injektor aufweist, wobei die Elektroden der Zündkerze in der Nähe des Einlassventils angeordnet sind. Der Kraftstoff wird in Form eines Hohlkegels in einen Kolben eingespritzt, der eine Mulde mit einem kreisförmigen vorstehenden Teil aufweist, und prallt gegen die Kolbenmulde. Der dabei gestreute Kraftstoff wird durch eine Tumbleströmung zu den Elektroden der Zündkerze transportiert, wobei der kreisförmige vorstehende Teil der Kolbenmulde den zerstäubten Kraftstoff daran hindert, in Richtung der Zylinderwand gestreut zu werden, wodurch eine stabile Schichtlade-Verbrennung gewährleistet wird.

Aus der DE 196 42 653 C1 ist ein Verfahren zur Bildung eines zündfähigen Gemisches im Brennraum einer direkteinspritzenden Brennkraftmaschine bekannt, bei dem ein Injektor verwendet wird, mit dem der Öffnungshub des Ventilgliedes und die Einspritzzeit variabel einstellbar sind, so dass insbesondere im Schichtladungsbetrieb eine verbrauchs- und emissionsoptimierte innere Gemischbildung ermöglicht wird. Weiterhin sieht die DE 196 42 653 C1 vor, dass die Elektroden der Zündkerze in eine Gemischwolke einragen und bei geringfügigen Ablagerungen infolge Kraftstoffbenetzung während des Einspritzvorgangs zuverlässig zünden sollen.

Aus der DE 195 46 945 A1 ist eine direkteinspritzende Brennkraftmaschine bekannt, deren Injektoren mit ihren Einspritzdüsen den Kraftstoff kegelförmig in den Brennraum einspritzen, wobei die Zündkerze derart angeordnet ist, dass ihre Elektroden außerhalb der Mantelfläche des von der Einspritzdüse erzeugten Kraftstoffkegels liegen. Auf diese Weise wird eine Benetzung der Elektroden mit Kraftstoff beim Einspritzvorgang vermieden und der Russablagerung auf den Elektroden aufgrund unvollständig verbrannten Kraftstoffes entgegengewirkt. Die Elektroden sind über einen langen Betriebszeitraum von Verkokungen frei, wodurch ein ordnungsgemäßes Arbeiten der Brennkraftmaschine ohne Zündaussetzer gewährleistet sein soll. Um zündfähiges Gemisch zwischen die außerhalb des Kraftstoffkegels angeordneten Elektroden zu bringen, ist die Zündkerze derart angeordnet, dass die Masseelektrode mit einem geringen Abstand zur Mantelfläche des Kraftstoffkegels liegt und die Innenwand des Zylinderkopfes parallel zur Mantelfläche des Kraftstoffkegels verläuft unter Ausbildung eines Zwischenraumes zumindest an derjenigen Stelle, an der die Elektroden der Zündkerze angeordnet sind.

In dem Zwischenraum soll sich eine Wirbelströmung ergeben, welche aus Kraftstoff/Luft-Gemisch besteht und in den Bereich der Elektroden reicht. Um die Wirbelströmung zu generieren, ist eine besondere Formgebung der Innenwand und eine injektornahe Anordnung der Zündkerze erforderlich. Der Injektor ist in einer Einsenkung der Innenwand angeordnet, also vom freien Brennraumvolumen zurückgesetzt, wodurch der Gemischwirbel in dem der Einspritzdüse benachbarten Bereich entstehen und in dem Hohlraum zirkulieren soll, welcher zwischen der Mantelfläche des Kraftstoffkegels und der Innenwand des Zylinderkopfes im Bereich der Einspritzdüse gebildet ist. Des weiteren soll durch den Luftspalt zwischen dem Kraftstoffkegel und der parallelen, ebenso kegelförmigen Innenwand des Zylinderkopfes Luft zurückströmen, die von dem in den Brennraum eingespritzten Kraftstoff verdrängt wurde. Während der Rückströmung zur Zündkerze entlang der Innenwand sollen weitere Kraftstoffteilchen aus dem Kraftstoffkegel mitgerissen werden. Die Wirbelströmung ist im injektornahen Bereich genügend stark ausgebildet, um zündfähiges Gemisch zwischen die Elektroden einer Zündkerze zu bringen. Die Zündkerze muss demnach nahe dem Injektor angeordnet sein.

Bei der bekannten direkteinspritzenden Otto-Brennkraftmaschine muss die Brennraumbegrenzung insbesondere durch die Innenwand des Zylinderkopfes mit hohem Aufwand präzise gestaltet werden, um die gewünschten strömungstechnischen Effekte zur Bildung der zündfähigen Gemischwirbel zu erreichen. Die bekannte Brennraumkonfiguration mit der zur Gemischwirbelbildung erforderlichen Brennraumform und der zwangsläufig injektornah angeordneten Zündkerze kann oftmals einen optimalen Verbrennungsvorgang nicht erreichen und das gewünschte Betriebsverhalten der Brennkraftmaschine gewährleisten.

Der vorliegenden Erfindung liegt die Aufgabe zugrunde, die direkteinspritzende Otto-Brennkraftmaschine der gattungsgemäßen Art derart auszubilden, dass die Brennkraftmaschine mit optimalem Betriebsverhalten arbeitet.

Diese Aufgabe wird erfindungsgemäß mit den Merkmalen des Anspruchs 1 gelöst.

Die erfindungsgemäße Brennkraftmaschine zeichnet sich dadurch aus, dass eine direkteinspritzende Otto-Brennkraftmaschine mit einem Brennraum vorgesehen ist, der in jedem Zylinder von einem eine Kolbenmulde aufweisenden längsbeweglichen Kolben und der Innenwand eines Zylinderkopfes begrenzt ist, ferner mit einem Injektor, dessen Einspritzdüse Kraftstoff hohlkegelförmig mit einem Öffnungswinkel zwischen 70° und 100° in den Brennraum einspritzt zur Bildung eines zündfähigen Kraftstoff/Luft-Gemisches mit separat zugeführter Verbrennungsluft, wobei das Gemisch von einer Zündkerze zu zünden ist, deren Elektroden außerhalb der Mantelfläche des von der Einspritzdüse erzeugten Kraftstoffkegels liegen, wobei in einem Schichtladungsbetrieb der Kraftstoff in Form eines von der Brennraumbegrenzung unbeeinflussten Freistrahls als ein Kraftstoffhohlkegel in den Brennraum bringbar ist, so dass ein Kraftstoffwirbel unabhängig von der Brennraumbegrenzung aus der Mantelfläche des eingespritzten Kraftstoffstrahls als Randwirbel gebildet wird , und die Zündkerze derart angeordnet ist, dass die Elektroden der Zündkerze in den bei der Einspritzung des Kraftstoffes aus der Mantelfläche des erzeugten Kraftstoffkegels hervortretenden Kraftstoffwirbel einragen.

Bei der erfindungsgemäßen Brennraumkonfiguration wird der Kraftstoffkegel in einem von der Brennraumbegrenzung nahezu unbeeinflussten Freistrahl eingespritzt, d.h. der Kraftstoffkegel wird in einem derartig großen Abstand, insbesondere von der Innenwand des Zylinderkopfes eingespritzt, dass sich der kegelförmige Kraftstoffstrahl weitgehend ohne strömungsmechanische Wandeffekte der Brennraumbegrenzung im freien Brennraumvolumen ausbreitet. Dabei bilden sich bei der Einspritzung aus der Mantelfläche des Kegels hervortretende Kraftstoffwirbel, welche zunächst hauptsächlich aus Kraftstoffdampf bestehen und sich mit der umliegenden Verbrennungsluft im Brennraum vermischen. Die Kraftstoffwirbel bilden sich besonders deutlich aus, wenn der Öffnungswinkel des Kraftstoffkegels zwischen 70° und 100° beträgt und werden durch eine Luftströmung erzeugt, welche im Bereich der Mantelfläche des Kraftstoffkegels aufgrund vom Kraftstoffstrahl mitgerissener Luft entsteht, wobei in entgegengesetzter Richtung durch den entstehenden Unterdruck ebenfalls eine Luftströmung erzeugt wird. Die Zündkerze wird erfindungsgemäß derart positioniert, dass die Elektroden in den Kraftstoffwirbel des Freistrahls einragen. Vorzugsweise ist die Funkenlage der Elektroden 1 mm bis 15 mm von der Mantelfläche des Kraftstoffkegels entfernt.

Der Kraftstoffwirbel, welcher zündfähiges Gemisch zwischen die Elektroden bringt, bildet sich an der Mantelfläche des Freistrahls ohne wirksamen Einfluss von der Brennraumbegrenzung aus, so dass die Brennraumform frei gestaltbar ist. Es liegt ein sogenanntes strahlgeführtes Brennverfahren vor, bei dem Wandeffekte der Innenwand des Zylinderkopfes oder etwa einer Kolbenmulde kaum Einfluss auf die Gemischbildung und die Zündung ausüben. Insbesondere im Schichtladungsbetrieb der Brennkraftmaschine, wenn mit Kraftstoffeinspritzung während des Kompressionshubes gearbeitet wird und bei luftgefülltem Brennraum eine zentrale Kraftstoffwolke gebildet wird, kann so mit einer einfachen Brennraumgestaltung ein optimales Durchbrennen der Brennraumladung erreicht werden. Ein weiterer Vorteil der erfindungsgemäßen Gemischbildung ist darin zu sehen, dass die Zündkerze weiter als bisher vom Injektor entfernt angeordnet sein kann. Der Kraftstoffwirbel liegt lange stabil an derselben Stelle im Brennraum, wodurch die Zündung in einem weiten Zeitintervall unabhängig vom Einspritzpunkt erfolgen kann.

Der Kraftstoff-Freistrahl wird vorzugsweise hohlkegelförmig in den Brennraum eingespritzt. Hierdurch bilden sich die Kraftstoffwirbel in einer besonders zum Gemischtransport zur Zündkerze geeigneten Form aus, insbesondere bei einer Einspritzung bei hohem Zylinderdruck in der Kompressionsphase während des Schichtladungsbetriebes. Besonders einfach ist der Kraftstoffkegel mit Hohlkegelform ausbild-bar, wenn der Injektor eine nach außen öffnende Einspritzdüse aufweist.

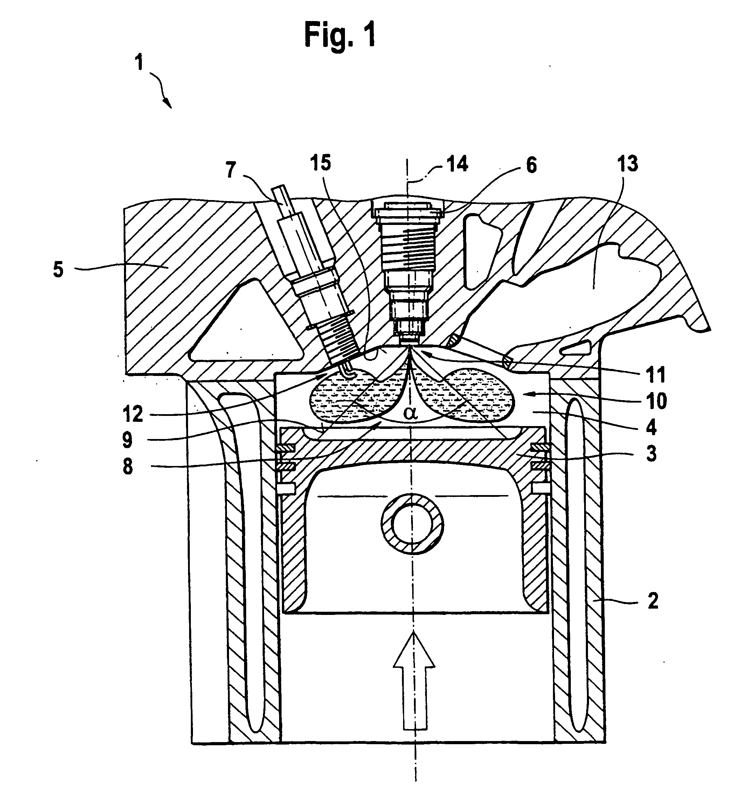

Ein Ausführungsbeispiel der Erfindung ist nachstehend anhand der Zeichnung näher erläutert.

Die einzige Zeichnungsfigur zeigt eine direkteinspritzende Otto-Brennkraftmaschine 1, in deren Zylinder 2 ein Kolben 3 längsbeweglich angeordnet ist und mit der Innenwand 15 eines auf den Zylinder 2 aufgesetzten Zylinderkopfes 5 einen Brennraum 4 begrenzt. Im Zylinderkopf 5 ist ein Kraftstoffinjektor 6 angeordnet, welcher zentral auf der Zylindermittelachse 14 liegend Kraftstoff auf den Kolben 3 gerichtet direkt in den Brennraum 4 einspritzt. Die zur inneren Gemischbildung erforderliche Verbrennungsluft wird durch einen Einlasskanal 13 dem Brennraum 4 zugeführt. Im Zylinderkopf 5 ist weiter eine Zündkerze 7 angeordnet, deren Elektroden 12 in den Brennraum 4 einragen, wobei zum Zündzeitpunkt ein Zündfunke zwischen den Elektroden 12 ausgelöst wird, welcher beim Überspringen zündfähiges Gemisch im Brennraum 4 durchschlägt.

Der Injektor 6 weist eine nach außen öffnende Einspritzdüse 11 auf, welche einen sich zum Kolben erweiternden, hohlkegelförmigen Kraftstoffstrahl erzeugt. Die Elektroden 12 der Zündkerze 7 liegen außerhalb der Mantelfläche 9 des von der Einspritzdüse 11 erzeugten Kraftstoffkegels 8 und werden so beim Einspritzvorgang nicht mit Kraftstoff benetzt.

Der Injektor wird piezoelektrisch betätigt, wobei die Einspritzdüse 11 von einem Piezoelement schnell und präzise einstellbar freigegeben und geschlossen wird. Durch die entsprechende Wahl der Einspritzzeit und deren präzise Einhaltung während des Arbeitsspiels mittels der piezoelektrischen Betätigung des Injektors wird die Ausbildung der gewünschten Freistrahlform des Kraftstoffkegels gefördert.

Die Brennkraftmaschine arbeitet in weiten Kennfeldbereichen im Schichtladungsbetrieb, wobei der Kraftstoff während des Kompressionstaktes des Zylinders 2 eingespritzt wird. Aufgrund der späten Kraftstoffeinspritzung während des Arbeitsspiels entsteht eine geschichtete Brennraumladung mit örtlich unterschiedlichen Kraftstoffkonzentrationen, wobei sich außerhalb des Kraftstoffkegels 8 sehr mageres Gemisch bildet bzw. reine Luft befindet.

Um zündfähiges Gemisch zwischen die Elektroden 12 der Zündkerze 7 zu bringen, weist die Brennkraftmaschine eine derartige Brennraumkonfiguration auf, dass der Kraftstoffkegel 8 in einem von der Brennraumbegrenzung durch die Zylinderkopf-Innenwand 15 weitgehend unbeeinflussten Freistrahl eingespritzt wird. Die Mantelfläche 9 des Kraftstoffkegels 8 kann weit von der Innenwand 15 entfernt liegen, wobei sich an dem vom Wandeinfluss der Brennraumbegrenzung entkoppelten Freistrahl Kraftstoffwirbel 10 bilden, welche aus der Mantelfläche 9 herausragen. Der Öffnungswinkel α des Kraftstoffkegels 8 beträgt zwischen 70° und 100°, wobei sich die Kraftstoffwirbel 10 am Kegelrand besonders ausgeprägt ergeben.

Die Kraftstoffwirbel 10 entstehen aufgrund einer Luftströmung im Bereich der Mantelfläche 9 des Kraftstoffkegels durch vom Kraftstoffstrahl mitgerissene Luft, wobei dieser Strömung entgegengesetzt durch den entstehenden Unterdruck ebenfalls eine Luftströmung erzeugt wird. Die Kraftstoffwirbel 10 transportieren Kraftstoff in weit außerhalb des Kraftstoffkegels 8 liegende Brennraumbereiche und vermischen sich dort mit der Verbrennungsluft.

Die Zündkerze ist derart angeordnet, dass die Elektroden 12 in den Gemischwirbel 10 einragen. Auch im außerhalb des Kraftstoffkegels 8 liegenden Brennraumbereich, in dem sich die Elektroden 12 vor direkter Kraftstoffbenetzung geschützt befinden, kann so mit den bei Freistrahleinspritzung vorliegenden Kraftstoffwirbeln 10 zündfähiges Gemisch an der Zündkerze 7 bereitgestellt werden.

Die Kraftstoffwirbel 10 bilden sich nahezu unabhängig von der Brennraumform aus und die Innenwand 15 des Zylinderkopfes 5 kann daher beliebig gestaltet werden. Der Einspritzfreistrahl ist hohlkegelförmig, wodurch ein hoher Anteil der gesamten Kraftstoff-Einspritzmenge in der Mantelfläche 9 des Kegelstrahls 8 geführt wird und so von den Kraftstoffwirbeln 10 erfassbar ist. Der Zündzeitpunkt kann in einem weiten Bereich im wesentlichen unabhängig vom Einspritzzeitpunkt variiert und bedarfsweise eingestellt werden, da die Kraftstoffwirbel über einen längeren Zeitraum stabil im Brennraum ausgeprägt werden und etwa 50 KW nach dem Einspritzende noch Kraftstoff an der Zündkerze 7 vorliegt.

Aufgrund der Stabilität der Kraftstoffwirbel 10 und des zur Zündung bereitstehenden langen Zeitraumes kann die Zündkerze 7 relativ weit vom Injektor 6 entfernt im Zylinderkopf angeordnet werden, wodurch sich die Brennraumkonfiguration und die konstruktive Gestaltung des Zylinderkopfes 5 wesentlich vereinfacht. Der Abstand der Funkenlage entsprechend der Anordnung der Elektroden 12 zur Einspritzdüse kann zwischen 7 mm und 30 mm betragen. Die Funkenlage ist dabei zwischen 1 mm bis 15 mm von der Mantelfläche 9 des Kraftstoffkegels 8 entfernt. Die Distanz der Elektroden 12 zum Kraftstoffkegel 8 wird entsprechend dem gewünschten Betriebsverhalten im jeweiligen Einsatzfall der direkteinspritzenden Otto-Brennkraftmaschine 1 gewählt.

## Patentansprüche

1. Direkteinspritzende Otto-Brennkraftmaschine mit einem Brennraum (4), der in jedem Zylinder (2) von einem eine Kolbenmulde aufweisenden längsbeweglichen Kolben (3) und der Innenwand (15) eines Zylinderkopfes (5) begrenzt ist, mit
- einem Injektor (6), dessen Einspritzdüse (11) Kraftstoff hohlkegelförmig mit einem Öffnungswinkel zwischen 70° und 100° in den Brennraum (4) einspritzt zur Bildung eines zündfähigen Kraftstoff/Luft-Gemisches mit separat zugeführter Verbrennungsluft, wobei
- das Gemisch von einer Zündkerze (7) zu zünden ist, deren Elektroden (12) außerhalb der Mantelfläche (9) des von der Einspritzdüse (11) erzeugten Kraftstoffkegels (8) liegen, wobei
- in einem Schichtladungsbetrieb der Kraftstoff in Form eines von der Brennraumbegrenzung unbeeinflussten Freistrahls als ein Kraftstoffhohlkegel in den Brennraum bringbar ist, so dass ein Kraftstoffwirbel (10) unabhängig von der Brennraumbegrenzung aus der Mantelfläche (9) des eingespritzten Kraftstoffstrahls als Randwirbel gebildet wird , und
- die Zündkerze derart angeordnet ist, dass die Elektroden (12) der Zündkerze (7) in den bei der Einspritzung des Kraftstoffes aus der Mantelfläche (9) des erzeugten Kraftstoffkegels (8) hervortretenden Kraftstoffwirbel (10) einragen.

2. Otto-Brennkraftmaschine nach Anspruch 1,
**dadurch gekennzeichnet, dass**
die Funkenlage der Elektroden (12) 1 mm bis 15 mm von der Mantelfläche (9) des Kraftstoffkegels (8) entfernt ist.

3. Otto-Brennkraftmaschine nach Anspruch 1 oder 2,
**dadurch gekennzeichnet, dass**
der Injektor (6) eine nach außen öffnende Einspritzdüse (11) aufweist.

4. Otto-Brennkraftmaschine nach Anspruch 3,
**dadurch gekennzeichnet, dass**
die Funkenlage der Elektroden (12) 7 bis 30 mm von der Einspritzdüse (11) entfernt ist.

5. Otto-Brennkraftmaschine nach einem der Ansprüche 1 bis 4,
**dadurch gekennzeichnet, dass**
der Injektor (6) piezoelektrisch betätigt wird.

6. Otto-Brennkraftmaschine nach einem der Ansprüche 1 bis 5,
**dadurch gekennzeichnet, dass**
die Brennkraftmaschine (1) in weiten Kennfeldbereichen mit Ladungsschichtung und Kraftstoffeinspritzung während des Kompressionstaktes betrieben wird.

## Claims

1. Direct-injection spark ignition engine with a combustion chamber (4), which in every cylinder (2) us bounded by a longitudinally displaceable piston (3) incorporating a piston depression and the internal wall (15) of a cylinder head (5), with
- an injector (6), the injection nozzle (11) of which injects fuel into the combustion chamber (4) in a hollow cone shape with an opening angle of between 70° and 100° to form an ignitable fuel/air mixture with separately delivered combustion air, wherein
- the mixture is ignited by a spark plug (7), the electrodes (12) of which lie outside of the outer surface (9) of the fuel cone (8) created by the injection nozzle (11), and
- during stratified charge mode, the fuel can be introduced into the combustion chamber as a hollow cone if fuel in the form of a free jet unaffected by the combustion chamber boundary so that a fuel vortex (10) is formed from the outer surface (9) of the injected fuel jet as a peripheral vortex independently of the combustion chamber boundary and
- the spark plug is disposed so that the electrodes (12) of the spark plug (7) project into the fuel vortex (10) created from the outer surface (9) of the resultant fuel cone (8) as the fuel is injected.

2. Spark ignition engine as claimed in claim 1,
**characterised in that**
the spark position of the electrodes (12) is at a distance of between 1 mm and 15 mm from the outer surface (9) of the fuel cone (8).

3. Spark ignition engine as claimed in claim 1 or 2,
**characterised in that**
the injector (6) has an outwardly opening injection nozzle (11).

4. Spark ignition engine as claimed in claim 3,
**characterised in that**
the spark position of the electrodes (12) is at a distance of 7 to 30 mm from the injection nozzle.

5. Spark ignition engine as claimed in one of claims 1 to 4,
**characterised in that**
the injector (6) is piezoelectrically operated.

6. Spark ignition engine as claimed in one of claims 1 to 5,
**characterised in that**
the internal combustion engine (1) can be operated within broad characteristic map ranges with stratified charging and fuel injection during the compression stroke.

## Revendications

1. Moteur à combustion interne à allumage commandé et à injection directe comprenant un espace de combustion (4), qui est délimité dans chaque cylindre (2) par un piston (3) mobile dans le sens longitudinal et présentant une cavité de piston et la paroi interne (15) d'une culasse de cylindre (5), avec
- un injecteur (6), dont le gicleur (11) injecte du carburant en forme de cône creux avec un angle d'ouverture compris entre 70° et 100° dans l'espace de combustion (4) pour la formation d'un mélange air/carburant inflammable avec de l'air de combustion arrivé séparément,
- le mélange devant être allumé par une bougie (7), dont les électrodes sont situées à l'extérieur de la surface d'enveloppe (9) du cône de carburant (8) généré par le gicleur (11),
- le carburant pouvant être amené dans le cadre d'une exploitation à charge stratifiée sous la forme d'un jet libre non influencé par la délimitation de l'espace de combustion comme un cône creux de carburant dans l'espace de combustion, de sorte qu'un tourbillon de carburant (10) est formé indépendamment de la délimitation de l'espace de combustion par la surface d'enveloppe (9) du jet de carburant injecté sous la forme de tourbillon périphérique, et
- la bougie étant disposée de telle sorte que les électrodes (12) de la bougie (7) dépassent dans le tourbillon de carburant (10) sortant lors de l'injection de carburant de la surface d'enveloppe (9) du cône de carburant (8) généré.

2. Moteur à combustion interne et à allumage commandé selon la revendication 1,
**caractérisé en ce que**
la position d'étincelle des électrodes (12) est éloignée de 1 mm à 15 mm de la surface d'enveloppe (9) du cône de carburant (8).

3. Moteur à combustion interne et à allumage commandé selon la revendication 1 ou 2,
**caractérisé en ce que**
l'injecteur (6) présente un gicleur (11) ouvrant vers l'extérieur.

4. Moteur à combustion interne et à allumage commandé selon la revendication 3,
**caractérisé en ce que**
la position d'étincelle des électrodes (12) est éloignée de 7 à 30 mm du gicleur (11).

5. Moteur à combustion interne et à allumage commandé selon l'une quelconque des revendications 1 à 4,
**caractérisé en ce que**
l'injecteur (6) est actionné de façon piézoélectrique.

6. Moteur à combustion interne et à allumage commandé selon l'une quelconque des revendications 1 à 5,
**caractérisé en ce que**
le moteur à combustion interne (1) est exploité dans de larges zones du champ caractéristique avec couche de charge et injection de carburant pendant le cycle de compression.
